# EUROPEAN PATENT APPLICATION

(11) **EP 4 683 017 A1**
(43) Date of publication of application: **21.01.2026**
(21) Application number: 23927072.1
(22) Date of filing: 28.09.2023
(51) Int. Cl.: H01M 10/04, H01M 50/533, H01M 50/536, H01M 50/169, H01M 50/152

(54) **BATTERY CELL AND BATTERY PACK**

(30) Priority: 16.03.2023 CN 202320585843 U
(71) Applicant: Sunwoda Mobility Energy Technology Co., Ltd., Shenzhen, Guangdong 518132 (CN)
(72) Inventor: YUAN, Cheng, Shenzhen, Guangdong 518132 (CN); YANG, Wei, Shenzhen, Guangdong 518132 (CN); LIN, Yongxiang, Shenzhen, Guangdong 518132 (CN); CHEN, Hui, Shenzhen, Guangdong 518132 (CN); ZHANG, Yao, Shenzhen, Guangdong 518132 (CN)
(74) Representative: Metida
(86) International application number: PCT/CN2023/122602
(87) International publication number: WO 2024/187727

(57) **Abstract**

Provided are a single-cell battery and a battery pack including a plurality of single-cell batteries. The single-cell battery includes a housing, a cell, a current collector plate and an end cover; where the housing is provided with an accommodation cavity and an opening communicating with the accommodation cavity; the housing includes an inner surface enclosing to form the accommodation cavity and an end surface connected to an edge of the inner surface and located at the opening; the cell is arranged in the accommodation cavity; the current collector plate is arranged in the accommodation cavity and includes a current collecting portion and a connecting portion connected with each other; the current collecting portion is electrically connected to the cell, and the connecting portion is connected to the end surface; the end cover seals the opening and is connected to a side of the connecting portion away from the end surface; the housing is welded with the connecting portion and the end cover at the end surface. In the present application, an edge of the housing at the opening, the connecting portion and the end cover are stacked and connected in sequence, and then the three can be welded together through one connection process.

## Description

### CROSS-REFERENCE TO RELATED APPLICATION

The present disclosure claims the benefit of Chinese patent application No. 202320585843.7, filed on March 16, 2023, titled "SINGLE-CELL BATTERY AND BATTERY PACK", which is incorporated herein by reference in its entirety.

### TECHNICAL FIELD

The present disclosure relates to the technical field of batteries, in particular to a single-cell battery and a battery pack.

### BACKGROUND

The storage capacity of a power battery determines the endurance mileage of the electric vehicle. The storage unit of a power battery is a single-cell battery. In most large cylindrical cells of single-cell batteries, the housing is negatively charged. The negative electrode side is welded to the negative current collector plate via a battery tab, and the negative current collector plate is welded to the housing or a top cover to achieve negatively charging of the housing. Then a cover is further welded to the housing. These two welding processes are carried out independently, resulting in a complex assembly process.

### SUMMARY

An objective of the present disclosure is to design a single-cell battery, to solve the complex assembly process problem, wherein two separate welding processes are required, one is the welding between the negative current collector plate and the housing or the end cover, and the other is the welding between the end cover and the housing.

To achieve the above objective, an embodiment of the present disclosure provides a single-cell battery, comprising:
a housing, provided with an accommodation cavity and an opening communicating with the accommodation cavity, wherein the housing comprises an inner surface enclosing to form the accommodation cavity, and an end surface connected to an edge of the inner surface and located at the opening;
a cell, arranged in the accommodation cavity;
a current collector plate, arranged in the accommodation cavity, wherein the current collector plate comprises a current collecting portion and a connecting portion connected with each other, the current collecting portion is electrically connected to the cell, and the connecting portion is connected to the end surface; and
an end cover, sealing the opening and connected to a side of the connecting portion away from the end surface, wherein the housing is welded with the end cover and the connecting portion at the end surface.

Optionally, in an axial direction of the opening, a thickness of the connecting portion is less than a thickness of the current collecting portion.

Optionally, the current collector plate further comprises a boss, and the boss is arranged on a side of the current collecting portion away from the cell and is connected to a side of the end cover facing the cell.

Optionally, a surface of the boss facing the end cover does not protrude beyond a surface of the connecting portion contacting the end cover.

Optionally, a side of the boss away from the end cover is provided with a material reduction groove.

Optionally, the current collector plate further comprises a cushion portion, the current collecting portion is connected to the connecting portion via the cushion portion, and the cushion portion is bent.

Optionally, the cushion portion is in a wavy-like shape or U-shaped.

Optionally, a thickness of the cushion portion is less than a thickness of the current collecting portion.

Optionally, the current collecting portion is provided with an exhaust hole in communication with the opening.

Optionally, the current collector plate further comprises a boss arranged on a side of the current collecting portion away from the cell, and there is a gap between a side of the boss facing the end cover and the end cover.

To achieve the above objective, an embodiment of the present disclosure provides a battery pack, comprising a box and a plurality of single-cell batteries as mentioned above, the plurality of single-cell batteries are electrically connected and arranged in the box.

Compared with technical solutions in the art, the single-cell battery and the battery pack provided according to the embodiments of the present disclosure have the following beneficial effects:

The single-cell battery comprises a housing, a cell, a current collector plate and an end cover; the housing is provided with an accommodation cavity and an opening communicating with the accommodation cavity, the housing comprises an inner surface enclosing to form the accommodation cavity, and an end surface connected to an edge of the inner surface and located at the opening; the cell is arranged in the accommodation cavity; the current collector plate is arranged in the accommodation cavity and comprises a current collecting portion and a connecting portion which are connected with each other; the current collecting portion is electrically connected to the cell, and the connecting portion is connected to the end surface; the end cover seals the opening and is connected to a side of the connecting portion away from the end surface; the housing is welded with the connecting portion and the end cover at the end surface. The current collector plate and the cell are arranged in the housing, and the current collector plate is connected to the housing and the cell, respectively. The cell is electrically connected to the housing through the current collector plate. The housing, the connecting portion and the end cover are stacked and connected in sequence, and then the three can be connected together by one connection process, such as welding. Thus, compared with the processing method of connecting the housing with the end cover and connecting the housing with the current collector plate, one connection process is omitted, which reduces the manufacturing cost.

### BRIEF DESCRIPTION OF THE DRAWINGS

To provide a clearer illustration of the technical solutions of the embodiments of the present disclosure, a brief introduction to the drawings involved in the embodiments will be provided below. Obviously, the following contents involving the drawings are only some embodiments of the present disclosure. For those skilled in the art, other drawings can also be obtained based on these drawings without creative labor.
Fig. 1 is a schematic diagram of a single-cell battery according to an embodiment of the present disclosure;
Fig. 2 is an exploded view of a single-cell battery according to an embodiment of the present disclosure;
Fig. 3 is a sectional schematic diagram of a single-cell battery according to an embodiment of the present disclosure;
Fig. 4 is an enlarged view of Part A in Fig. 3;
Fig. 5 is a structural schematic diagram of a current collector plate according to an embodiment of the present disclosure;
Fig. 6 is a sectional schematic diagram of a current collector plate according to an embodiment of the present disclosure;
Fig. 7 is a structural schematic diagram of a battery pack according to an embodiment of the present disclosure.

Reference signs in the drawings: 200, box; 100, single-cell battery; 10, housing; 101, accommodation cavity; 102, inner surface; 103, opening; 104, end surface; 20, cell; 30, current collector plate; 31, current collecting portion; 301, exhaust hole; 32, connecting portion; 33, boss; 303, material reduction groove; 34, cushion portion; 40, end cover.

### DETAILED DESCRIPTION

The specific embodiments of the present disclosure will be described below in detail by referring to the drawings and examples. The following examples are provided to illustrate the present application, but are not intended to limit the scope of the present application.

In the description of the present application, the terms "connected", "connection", "fixed" and the like used herein should be understood in a broad sense. For example, they may mean a fixed connection, a detachable connection; an integral; a mechanical connection, or a welding connection; a direct connection, or an indirect connection through an intermediate medium; or an internal connection between two components or an interaction relationship between two components, unless otherwise explicitly limited. For those skilled in the art, the specific meanings of these terms in the present disclosure can be understood according to specific situations.

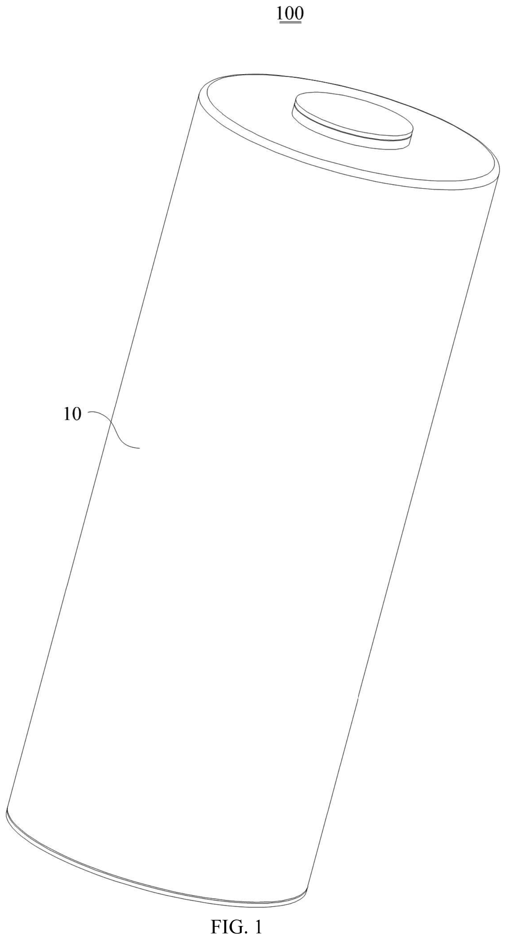

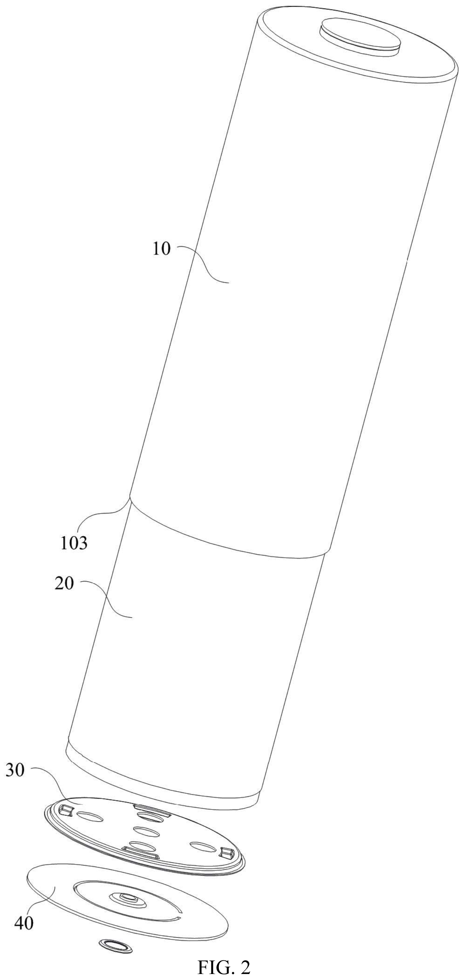

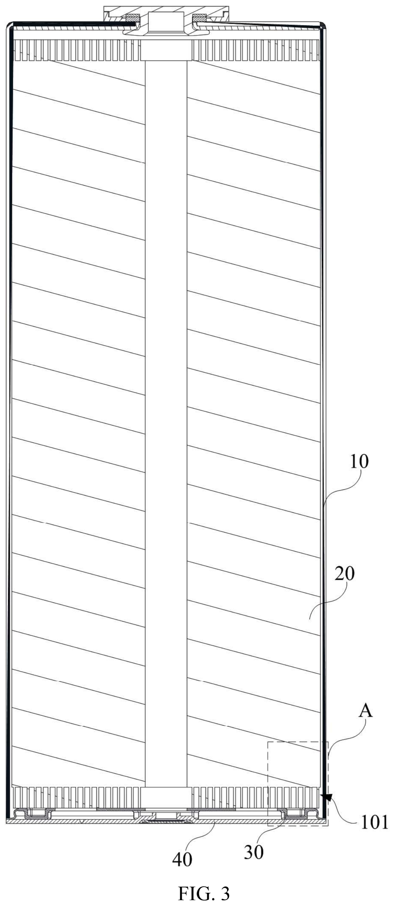

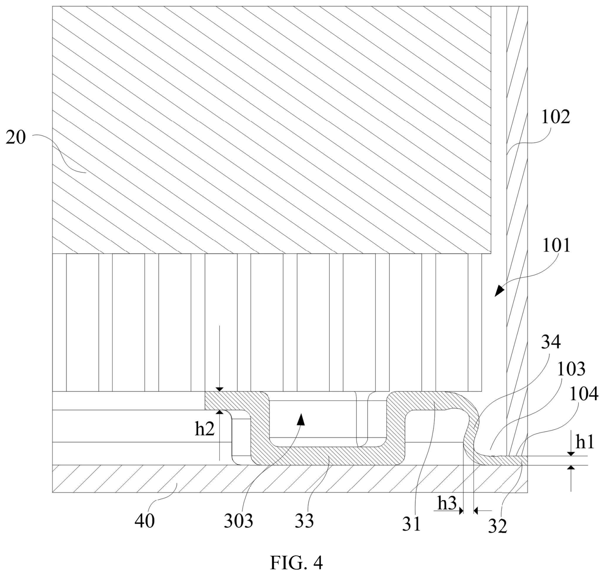

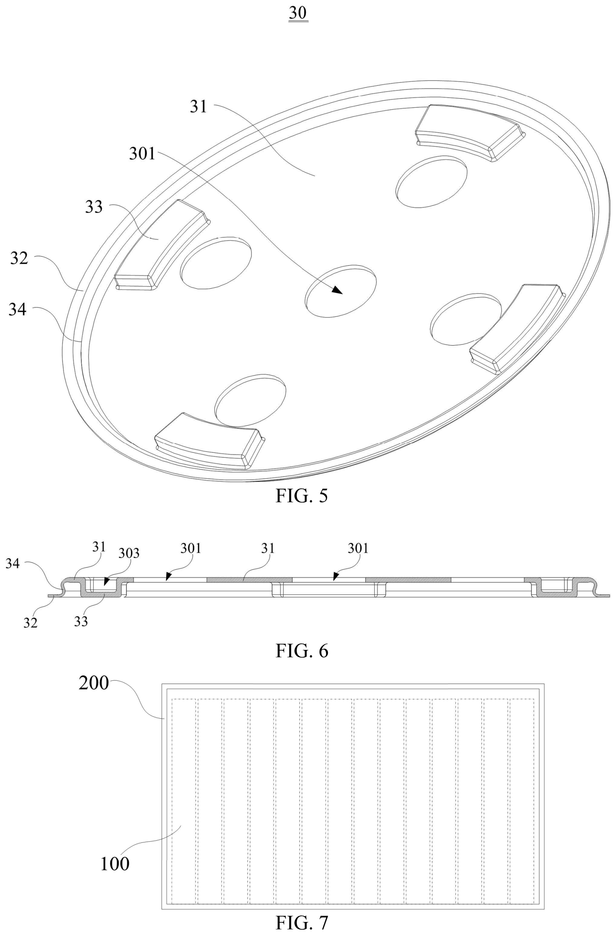

Refer to Fig. 1 to Fig. 6. Fig. 1 is a schematic diagram of a single-cell battery 100 according to an embodiment of the present disclosure. Fig. 2 is an exploded view of a single-cell battery 100 according to an embodiment of the present disclosure. Fig. 3 is a sectional schematic diagram of a single-cell battery 100 according to an embodiment of the present disclosure. Fig. 4 is an enlarged view of Part A in Fig. 3. Fig. 5 is a structural schematic diagram of a current collector plate 30 according to an embodiment of the present disclosure. Fig. 6 is a sectional schematic diagram of a current collector plate 30 according to an embodiment of the present disclosure.

A single-cell battery 100 according to an embodiment of the present disclosure comprises a housing 10, a cell 20, a current collector plate 30 and an end cover 40. The housing 10 is provided with an accommodation cavity 101 and an opening 103 communicating with the accommodation cavity 101. The housing 10 includes an inner surface 102 and an end surface 104. The inner surface 102 is the internal surface of the housing 10. The inner surface 102 encloses to form the accommodation cavity 101. The end surface 104 is connected to an edge of the inner surface 102 and is located at the opening 103. The end surface 104 is an end surface of the housing 10 at the opening 103. The housing 10 can be made of a metal material such as aluminum or steel, and the housing 10 is electrically conductive. The cell 20 can be placed in the accommodation cavity 101 through the opening 103. The cell 20 consists of a positive electrode plate, a separator and a negative electrode plate that are stacked together. The positive electrode plate is positively charged, and the negative electrode plate is negatively charged. The current collector plate 30 can be placed in the accommodation cavity 101 through the opening 103. The current collector plate 30 comprises a current collecting portion 31 and a connecting portion 32 connected with each other. The current collecting portion 31 is electrically connected to the cell 20, and the connecting portion 32 is connected to the end surface 104. The end cover 40 seals the opening 103 and is connected to a side of the connecting portion 32 away from the housing 10. The housing 10, the connecting portion 32 and the end cover 40 are stacked and connected together in sequence. The connection can be performed by welding, etc.

In this embodiment, the current collector plate 30 and the cell 20 are arranged within the housing 10, the current collector plate 30 is connected to the housing 10 and the cell 20 respectively, and the cell 20 is electrically connected to the housing 10 through the current collector plate 30. The end cover 40 seals the opening 103 and is connected to a side of the connecting portion 32 away from the housing 10. The end cover 40 and the current collector plate 30 are electrically connected together. The housing 10, the connecting portion 32 and the end cover 40 are stacked in sequence, and then the three can be connected together through one connection process, such as welding. Thus, compared with the processing method in which the housing 10 is connected to the end cover 40 and the end cover 40 is connected to the current collector plate 30, one connection process in which the end cover 40 is connected to the current collector plate 30 is omitted, which reduces the manufacturing cost.

In one embodiment, in an axial direction of the opening 103, a thickness h1 of the connecting portion 32 is less than a thickness h2 of the current collecting portion 31, that is, the connecting portion 32 is thinner than the current collecting portion 31. When connection is performed with welding or riveting, the processing energy is more easily transmitted. For example, in a case of welding, the heat can quickly be transmitted among the housing 10, the connecting portion 32, and the end cover 40, so that the temperatures of the three can quickly become consistent, accelerating the welding and fixation of the three; and in a case of riveting, the impact force can quickly be transmitted among the housing 10, the connecting portion 32, and the end cover 40, so that the three can deform and fix together.

In one embodiment, the current collector plate 30 further comprises a boss 33. The boss 33 is arranged on a side of the current collecting portion 31 away from the cell 20. The boss 33 is connected to a side of the end cover 40 facing the cell 20. The boss 33 is solid, and the end cover 40 is connected to the current collecting portion 31 via the boss 33, and further electrically connected to the cell 20. The electric charge of the cell 20 can flow through the path composed of the current collecting portion 31, the boss 33, and the end cover 40, thereby increasing the current-carrying cross-sectional area and enabling the single-cell battery 100 in this embodiment to achieve high-current operation.

In another embodiment, a material reduction groove 303 is provided on a side of the boss 33 away from the end cover 40, that is, the difference of this embodiment from the preceding embodiment lies in that the boss 33 is hollow. Under the premise of ensuring the normal electrical conductivity of the current collecting portion 31, the boss 33 and the end cover 40, excess material of the boss 33 facing the cell 20 is removed, thereby reducing the overall weight of the current collector plate 30. The current collector plate 30 with a material reduction groove 303 can be formed by a one-piece molding method. For example, the stamping process can form the current collecting portion 31, the connecting portion 32, the boss 33, and the material reduction groove 303 from a single plate.

In the embodiment in which the boss 33 is solid or in the embodiment in which the boss 33 is hollow, a surface of the boss 33 facing the end cover 40 does not protrude beyond a surface of the connecting portion 32 contacting the end cover 40.

In some examples, the surface of the boss 33 facing the end cover 40 is flush with the surface of the connecting portion 32 contacting the end cover 40, that is, the surface of the boss 33 facing the end cover 40 contacts the end cover 40. The boss 33 presses against an inner surface of the end cover 40. Thus, after the connecting portion 32 and the end cover 40 are welded together, the end cover 40 will not deform even if the boss 33 and the connecting portion 32 have different heights. The boss 33 has a supporting effect on the end cover 40, effectively preventing the end cover 40 from deforming under compression.

In some other examples, the surface of the boss 33 facing the end cover 40 is not flush with the surface of the connecting portion 32 contacting the end cover 40. That is, the end cover 40 and the boss 33 are spaced apart, and a gap is formed between the end cover 40 and the boss 33, which facilitates the assembly of the current collector plate 30.

Further, the current collector plate 30 further comprises a cushion portion 34. The current collecting portion 31 is connected to the connecting portion 32 via the cushion portion 34. The cushion portion 34 is in a bent state. The cushion portion 34 is sandwiched between the current collecting portion 31 and the connecting portion 32, and the cushion portion 34 in a bent state can elastically deform under an external force, thereby adjusting a distance between the current collecting portion 31 and the connecting portion 32, facilitating the welding of the current collecting portion 31 and the electrode tab of the cell 20, as well as the welding of the connecting portion 32 and the end cover 40 and the housing 10, reducing the difficulty of welding and improving the strength of the welding. When the housing 10, the connecting portion 32, and the end cover 40 are connected by using welding or riveting or other connection processes, the current collector plate 30 may deform or the cell 20 may vibrate, causing the distance between the current collecting portion 31 and the connecting portion 32 to change. Due to the existence of the cushion portion 34, the change in the distance between the current collecting portion 31 and the connecting portion 32 can be smoothly cushioned by the bending deformation of the cushion portion 34, preventing the current collector plate 30 from fracturing due to hard pulling. Similarly, when a single-cell battery 100 is assembled into a vehicle, it will undergo vibrations together with the vehicle. During the vibration, the cell 20 will cause the current collecting portion 31 to vibrate, and the distance between the current collecting portion 31 and the connecting portion 32 will change. Due to the existence of the cushion portion 34, the change in the distance between the current collecting portion 31 and the connecting portion 32 can be smoothly cushioned by the bending deformation of the cushion portion 34, preventing the current collector plate 30 from fracturing due to hard pulling.

Further, on the basis of the gap formed between the end cover 40 and the boss 33, in combination with the function of the cushion portion 34, a space for the buffer deformation of the current collector plate 30 is provided.

The cushion portion 34 can be in a wavy-like shape with one, two, three, or more waves. The cushion portion 34 in a wave-like shape constitutes an elastic structure similar to a spring.

The cushion portion 34 can also be U-shape. The U-shaped cushion portion 34 consists of a first section and a second section. One end of the first section and one end of the second section are connected, and the other end of the first section and the other end of the second section extend in the same direction and are connected to the current collecting portion 31 and the connecting portion 32, respectively. When subjected to a force, the first section will move relative to the second section, generating an elastic force. The cushion portion 34 can cause the first section and the second section to return to their original state through the elastic force.

In one embodiment, a thickness h3 of the cushion portion 34 is less than the thickness h2 of the current collecting portion 31, that is, the cushion portion 34 is thinner than the current collecting portion 31. When a single-cell battery 100 is assembled by using welding or riveting or during the operation of the single-cell battery 100, the cushion portion 34 is more likely to deform under an external force, that is, the sensitivity of the buffer part 34 to deformation is increased, which can quickly adjust the distance between the current collecting portion 31 and the connecting portion 32.

The current collecting portion 31 is provided with an exhaust hole 301, which passes through the current collecting portion 31. A plurality of the exhaust holes 301 can be provided. The plurality of the exhaust holes 301 are distributed on the current collecting portion 31. Each of the exhaust holes 301 is in communication with the opening 103, and gas inside the housing 10 can be released through the exhaust holes 301 toward the opening 103. When the single-cell battery 100 is abused and a large amount of gas is produced, the gas can be smoothly safely released through the exhaust holes 301 toward the opening 103 and then discharged through the explosion-proof valve on the end cover 40 to avoid a risk of explosion in the single-cell battery 100.

As shown in Fig. 7, Fig. 7 is a structural schematic diagram of a battery pack according to an embodiment of the present disclosure.

The battery pack comprises a box 200 and a plurality of single-cell batteries 100 according to any of the aforementioned embodiments. The plurality of single-cell batteries 100 are electrically connected and arranged within the box 200.

The above are only the preferred embodiments of the present disclosure. It should be pointed out that for those skilled in the art in this field, without departing from the technical principles of the present disclosure, various improvements and substitutions can be made, and these improvements and substitutions should also be regarded as within the scope of protection of the present disclosure.

## Claims

1. A single-cell battery (100), **characterized by** comprising:
a housing (10), provided with an accommodation cavity (101) and an opening (103) communicating with the accommodation cavity (101), wherein the housing (10) comprises an inner surface (102) enclosing to form the accommodation cavity (101), and an end surface (104) connected to an edge of the inner surface (102) and located at the opening (103);
a cell (20), arranged in the accommodation cavity (101);
a current collector plate (30), arranged in the accommodation cavity (101), wherein the current collector plate (30) comprises a current collecting portion (31) and a connecting portion (32) connected with each other, the current collecting portion (31) is electrically connected to the cell (20), and the connecting portion (32) is connected to the end surface (104); and
an end cover (40), sealing the opening (103) and connected to a side of the connecting portion (32) away from the end surface (104), wherein the housing (10) is welded with the end cover (40) and the connecting portion (32) at the end surface (104).

2. The single-cell battery (100) according to claim 1, **characterized in that** in an axial direction of the opening (103), a thickness of the connecting portion (32) is less than a thickness of the current collecting portion (31).

3. The single-cell battery (100) according to claim 1, **characterized in that** the current collector plate (30) further comprises a boss (33), and the boss (33) is arranged on a side of the current collecting portion (31) away from the cell (20) and is connected to a side of the end cover (40) facing the cell (20).

4. The single-cell battery (100) according to claim 1, **characterized in that** a surface of the boss (33) facing the end cover (40) does not protrude beyond a surface of the connecting portion (32) contacting the end cover (40).

5. The single-cell battery (100) according to claim 3, **characterized in that** a side of the boss (33) away from the end cover (40) is provided with a material reduction groove (303).

6. The single-cell battery (100) according to claim 1, **characterized in that** the current collector plate (30) further comprises a cushion portion (34), the current collecting portion (31) is connected to the connecting portion (32) via the cushion portion (34), and the cushion portion (34) is bent.

7. The single-cell battery (100) according to claim 6, **characterized in that** the cushion portion (34) is in a wavy-like shape or U-shaped.

8. The single-cell battery (100) according to claim 6, **characterized in that** a thickness of the cushion portion (34) is less than a thickness of the current collecting portion (31).

9. The single-cell battery (100) according to claim 1, **characterized in that** the current collecting portion (31) is provided with an exhaust hole (301) in communication with the opening (103).

10. The single-cell battery (100) according to claim 1, **characterized in that** the current collector plate (30) further comprises a boss (33) arranged on a side of the current collecting portion (31) away from the cell (20), and there is a gap between a side of the boss (33) facing the end cover (40) and the end cover (40).

11. A battery pack, **characterized by** comprising a box (200) and a plurality of single-cell batteries (100) according to claim 1, the plurality of single-cell batteries (100) are electrically connected and arranged in the box (200).
